# EUROPÄISCHE PATENTANMELDUNG

(11) **EP 3 462 260 A1**
(43) Veröffentlichungstag der Anmeldung: **03.04.2019**
(21) Anmeldenummer: 17194086.9
(22) Anmeldetag: 29.09.2017
(51) Int. Cl.: G05B 19/418

(54) **VERFAHREN UND ANORDNUNG ZUR ÜBERWACHUNG DES ZUSTANDS EINER PRODUKTIONSEINRICHTUNG**

(71) Anmelder: Siemens Aktiengesellschaft, 80333 München (DE)
(72) Erfinder: Menzel, Thomas, 91094 Langensendelbach OT Bräuningshof (DE); Jahn, Lars, 91096 Möhrendorf (DE)

(57) **Zusammenfassung**

Die Erfindung betrifft ein Verfahren und eine Anordnung zur Überwachung des Zustands einer Produktionseinrichtung einer industriellen Automatisierungsanordnung, wobei die Produktionseinrichtung zur Durchführung eines industriellen Prozesses oder einer industriellen Produktion mit einer Steuerungseinrichtung (ST1, ST2) mit daran angekoppelten Sensoren (S11, ..., S22) und Aktoren ausgerüstet ist, und wobei Signale dieser Sensoren (S11, ..., S22) durch die Steuerungseinrichtung (ST1, ST2) zur Erzeugung von Statusinformationen über den industriellen Prozess oder die industrielle Produktion verwendet werden. Dabei wird mit einem durch die Produktionseinrichtung verarbeiteten Produkt (PG) zumindest ein weiterer Sensor (WS) durch die Produktionseinrichtung hindurchgeführt, wobei durch den weiteren Sensor (WS) weitere Signale drahtlos zu der Zustandsüberwachungseinrichtung (Z) übertragen werden, und wobei die Signale und/oder die Statusinformationen und die weiteren Signale zur Generierung einer Zustandsinformation über die Produktionseinrichtung zumindest teilweise miteinander in Bezug gesetzt verwendet werden. Durch dieses Verfahren ist es möglich, die Zustandsüberwachung separat von der Produktionseinrichtung zu projektieren, wobei es weiterhin möglich ist, Informationen der industriellen Steuerungseinrichtung mit den Informationen und Daten eines mobilen, durch die Produktionseinrichtung durchlaufenden Sensors (weiterer Sensor) zu kombinieren, so dass genauere Zustandsinformationen über den Zustand der Produktionseinrichtung gewonnen werden können.

## Beschreibung

Die Erfindung betrifft ein Verfahren zur Überwachung des Zustands einer Produktionseinrichtung gemäß dem Oberbegriff des Patentanspruchs 1, und eine Anordnung zur Überwachung des Zustands einer Produktionseinrichtung gemäß dem Oberbegriff des Patentanspruchs 10.

In industriellen Automatisierungsanordnungen werden regelmäßig Produktionseinrichtungen (Produktionsmittel) für die Durchführung eines Fertigungsprozesses oder Produktionsprozesses oder dergleichen eingesetzt. Die Produktionseinrichtungen umfassen regelmäßig eine industrielle Steuerung (Steuerungseinrichtung), die oft auch als speicherprogrammierbare Steuerung oder kurz PLC (Programmable Logic Controller) bezeichnet wird. Weiter sind Sensoren und Aktoren regelmäßig Bestandteil einer Produktionseinrichtung, wobei diese Sensoren und Aktoren regelmäßig über ein Feldbussystem oder andere Kommunikationsmittel mit den Steuerungseinrichtungen verknüpft sind. Zu den Produktionseinrichtungen gehören weiter auch alle anderen Produktionsmittel, insbesondere Maschinen (z.B. Werkzeugmaschinen), Fördermittel, Kessel, Heizungen, Kompressoren usw.

Die erwähnten Sensoren dienen in erster Linie der Erzeugung von Messwerten oder allgemein Eingangssignalen für die speicherprogrammierbaren Steuerungen, wodurch ein Steuerungsprogramm in die Lage versetzt wird, den Zustand einer Produktion, eines Produktes oder eines chemischen Prozesses zu erfassen und in Reaktion auf diese damit generierten Zustandsinformationen die erwähnten Aktoren entsprechend anzusteuern und weiterhin Daten für Bedien- und Beobachtungsgeräte (sogenannte HMI-Geräte; HMI = Human Machine Interface) bereitzustellen. Bezogen auf die Produktionsmittel werden mit den Sensoren beispielsweise Drehzahlen und Drehmomente von Antrieben, Temperaturen von Produktionsmitteln (z.B. Motoren), mechanische Zustände und dergleichen erfasst.

Vermehrt werden diese Sensoren auch dazu eingesetzt, um Wartungsinformationen zu erzeugen. Beispielsweise können mit den erwähnten Sensoren Fehlfunktionen festgestellt werden (z.B. Überhitzung von Betriebsteilen, Ausfall von Aktoren), was dann als Fehler gemeldet wird und was dazu führt, dass Teile der Produktionseinrichtung außer Betrieb gesetzt werden oder in einen sicheren Zustand überführt werden. Dazu sind in den Steuerungsprogrammen der speicherprogrammierbaren Steuerung (Steuerungseinrichtung) regelmäßig Software-Routinen und andere Anweisungen programmiert, die die Eingangssignale der Sensoren auf unplausible oder unzulässige Zustände hin untersuchen.

Die damit durchgeführte Zustandsanalyse von Produktionsmaschinen und anderen Teilen der Produktionseinrichtungen wird mit dem Ziel eingesetzt, Verschleißzustände zu erkennen und ggf. auch eine vorbeugende Wartung vorzunehmen, um eine Verfügbarkeit zu erhöhen. Weitere Ziele sind die Optimierung einer Produktivität, eine Überwachung und Verbesserung einer Produktqualität und die Senkung von Betriebskosten und dem Aufwand für Ressourcen (z. B. Energie).

Die in den speicherprogrammierbaren Steuerungen mögliche Zustandsüberwachung stößt aus verschiedenen Gründen oft an Grenzen, beispielsweise wegen der beschränkten verfügbaren Rechenzeit in den speicherprogrammierbaren Steuerungen, deren vornehmliche Aufgabe in der Steuerung eines Produktionsprozesses besteht, wegen der beschränkten Anzahl von Sensoren, die vorwiegend nur dort vorhanden sind, wo sie zur Steuerung des regulären Betriebsablaufs unabdingbar sind, und nicht zuletzt wegen der Notwendigkeit, die in den speicherprogrammierbaren Steuerungen vorgesehene Zustandsanalyse bereits zur Projektierung der Automatisierungsanordnung vorzusehen und in den Steuerungsprogrammen einzuarbeiten.

Wegen dieser Einschränkungen haben sich vermehrt externe Systeme zur Zustandsanalyse von Maschinen und Prozessen verbreitet, die Verschleißzustände erkennen sollen und ggf. eine vorbeugende Wartung anstoßen können bzw. die Planung einer solchen vorbeugenden Wartung ermöglichen sollen. Eines dieser Produkte ist exemplarisch das System Siplus CMS der Siemens AG. Mit solchen Zustandsüberwachungseinrichtungen (auch "CMS" genannt - CMS = Condition Monitoring System) ist es möglich, beispielsweise Schwingungsverhalten von Maschinenteilen zu überwachen, das Umkehrspiel von Kugelrollspindeln auf der Basis von Soll-Ist-Positionen zu überwachen, Drehmomente und Ströme von elektrischen Maschinen zur Detektion von Verschleiß zu überwachen, Bewegungen und deren Veränderungen beispielsweise bei Werkzeugmaschinen zu überwachen etc.

Charakteristisch für die vorstehend beschriebenen Methoden ist, dass die Analyse (Zustandsüberwachung) entweder auf Größen (insbesondere Sensorwerte) in der Steuerung oder den Antrieben beruht, oder alternativ eine externe Sensorik verwendet, die häufig beispielsweise für Temperatur, Schwingung, Beschleunigung, Dehnung oder andere Größen Messwerte ermittelt. Charakteristisch ist zudem, dass die Sensorik regelmäßig als Teil der Automatisierungslösung projektiert werden muss und den Maschinenzustand an bestimmten, im Engineering bereits festgelegten Maschinenelementen erfasst.

Dies hat den Nachteil, dass die Zustandsanalyse und somit die Überwachung der Produktionseinrichtungen regelmäßig nur in demjenigen Umfang vorgenommen werden kann, der bereits zum Zeitpunkt der Projektierung der industriellen Automatisierungsanordnung vorgesehen worden ist. Durch die damit gegebene Verbindung der Zustandsüberwachung mit der Kernaufgabe der Automatisierungsanordnung, nämlich der Automatisierung eines industriellen Prozesses oder einer industriellen Produktion, ergibt sich zudem eine hohe Komplexität und eine geringe Variabilität. Zudem ist nachteilig, dass bei einer komplexen, mehrschritten Produktion immer nur ein lokales Condition Monitoring möglich ist, also beschränkt auf eine Steuerung bzw. der damit gesteuerten Maschine oder eine Gruppe solcher Einrichtungen.

Es ist also eine Aufgabe der vorliegenden Erfindung, die Überwachung des Zustands einer Produktionseinrichtung zu verbessern und zu vereinfachen.

Es ist eine Kernidee der erfindungsgemäßen Lösung dieser Aufgabe, dass die Projektierung und Ausführung der Maschinensteuerung von der Projektierung und dem Aufbau der Zustandsüberwachung getrennt wird, wobei der dann externen Zustandsüberwachung auch Sensordaten und Zustandsinformationen der Maschinensteuerung zur Verfügung stehen und wobei zusätzlich mobile Sensoren, sogenannte Schüttgutsensorik, zusammen mit einem produzierten Gut durch eine mehrschrittige Produktion mitgeführt wird und wobei die Daten dieser mobilen Sensorik mit den Sensor- und Zustandsdaten des jeweiligen durchlaufenen Anlagenteils bzw. des Produktionsschritts korreliert wird.

Die Aufgabe wird insbesondere durch ein Verfahren gemäß dem Patentanspruch 8 und eine Anordnung gemäß Patentanspruch 10 gelöst.

Dabei wird ein Verfahren zum Überwachungszustand einer Projektionseinrichtung einer industriellen Automatisierungsanordnung vorgeschlagen, wobei die Produktionseinrichtung zur Durchführung eines industriellen Prozesses oder einer industriellen Produktion mit einer Steuerungseinrichtung mit daran angekoppelten Sensoren und Aktoren ausgerüstet ist, und wobei Signale dieser Sensoren durch die Steuerungseinrichtung zur Erzeugung von Statusinformationen über den industriellen Prozess oder die industrielle Produktion verwendet werden. Dabei wird mit einem durch die Produktionseinrichtung verarbeiteten Produkt zumindest ein weiterer Sensor durch die Produktionseinrichtung hindurchgeführt, wobei durch den weiteren Sensor weitere Signale drahtlos zu der Zustandsüberwachungseinrichtung übertragen werden, und wobei die Signale und/oder die Statusinformationen und die weiteren Signale zur Generierung einer Zustandsinformation über die Produktionseinrichtung zumindest teilweise miteinander in Bezug gesetzt verwendet werden. Durch dieses Verfahren ist es möglich, die Zustandsüberwachung separat von der Produktionseinrichtung zu projektieren, wobei es weiterhin möglich ist, Informationen der industriellen Steuerungseinrichtung mit den Informationen und Daten eines mobilen, durch die Produktionseinrichtung durchlaufenden Sensors (weiterer Sensor) zu kombinieren, so dass genauere Zustandsinformationen über den Zustand der Produktionseinrichtung gewonnen werden können.

Die Aufgabe wird außerdem durch eine Anordnung zur Überwachung des Zustands einer Produktionseinrichtung einer industriellen Automatisierungsanordnung gelöst, wobei die Produktionseinrichtung zur Durchführung eines industriellen Prozesses oder einer industriellen Produktion mit Sensoren und Aktoren ausgerüstet ist, und wobei Signale dieser Sensoren zur Erzeugung von Statusinformationen über den industriellen Prozess oder die industrielle Produktion durch die Steuerungseinrichtung vorgesehen sind. Dabei ist vorgesehen, dass mit einem durch die Produktionseinrichtung verarbeiteten Produkt zumindest ein weiterer Sensor durch die Produktionseinrichtung hindurchgeführt oder in die Nähe der Produktionseinrichtung verbracht wird, wobei durch den weiteren Sensor weitere Signale drahtlos zu der Zustandsüberwachungseinrichtung übertragbar sind, und wobei vorgesehen ist, dass die Signale der Sensoren und/oder die Statusinformationen mit den weiteren Signalen des weiteren Sensors zumindest teilweise miteinander in Bezug gesetzt und zur Generierung einer Zustandsinformation über die Produktionseinrichtung verwendet werden. Mit dieser Anordnung ist es möglich, die bereits im Zusammenhang mit dem erfindungsgemäßen Verfahren geschilderten Vorteile zu realisieren.

Vorteilhafte Ausgestaltungen des Verfahrens und der Anordnung sind in den abhängigen Patentansprüchen angegeben. Die für das Verfahren aufgezählten vorteilhaften Ausgestaltungen gelten sinngemäß auch für die erfindungsgemäße Anordnung, und umgekehrt. Die in den abhängigen Patentansprüchen angegeben vorteilhaften Ausgestaltungen können sowohl einzeln als auch in sinnfälliger Kombination miteinander realisiert werden.

In einer vorteilhaften Ausgestaltung sind die Steuerung oder mehrere Steuerungen des industriellen Prozesses oder der industriellen Produktion mit einer oder mehreren Zustandsüberwachungseinrichtungen mittels eines Netzwerkes (Datennetzwerk) verbunden, so dass die zumindest eine Zustandsüberwachungseinrichtung auf die Signale der Sensoren, die mit der industriellen Steuerung oder den industriellen Steuerungen verknüpft sind und auf die internen Statusinformationen über den industriellen Prozess oder die industrielle Produktion, die in der einen oder den mehreren Steuerungseinrichtungen vorliegen, zugreifen können.

Vorteilhaft bildet der weitere Sensor mit der Zustandsüberwachungseinrichtung oder einem Funkmodul der Zustandsüberwachungseinrichtung ein ad-hoc-Netzwerk, sobald der weitere Sensor in die Funkreichweite eines Funkmoduls der Zustandsüberwachungseinrichtung gelangt. Damit ist es möglich, bei Vorliegen einer günstigen Funkkonstellation die weiteren Signale des weiteren Sensors auszulesen, ohne dass eine Verbindung zwischen dem weiteren Sensor und der Netzwerktechnik oder der Zustandsüberwachungseinrichtung manuell etabliert werden muss.

In einer vorteilhaften Variante wird die Produktionseinrichtung aus einer Mehrzahl Produktionsstationen gebildet, wobei der weitere Sensor während eines Durchlaufs durch die Produktionseinrichtung zur Zustandserfassung mehrerer Produktionsstationen verwendet wird. Damit ist es auch möglich, die Signale des weiteren Sensors mit den Zustandsinformationen und Sensordaten der verschiedenen Produktionsstationen zu verknüpfen, wodurch es möglich ist, nicht nur einzelne der Produktionsstationen einer Zustandsüberwachung zu unterziehen, sondern auch eine Gesamtinformation oder Gesamtaussage über die komplette Produktionseinrichtung zu gewinnen. Dabei ist es von Vorteil, wenn der weitere Sensor im Durchlauf der Produktionseinrichtung mit einer Mehrzahl von Funkeinrichtungen einer einzigen Zustandsüberwachungseinrichtung oder mit einer Mehrzahl von Zustandsüberwachungseinrichtungen der industriellen Produktionseinrichtung die weiteren Signale austauscht. Dabei kann die Zustandsüberwachung zeitlich und räumlich engmaschiger ausgeführt werden, zudem ist es auch möglich, die Signale ein- und desselben Sensors mehreren Zustandsüberwachungseinrichtungen einer weitverzweigten Produktionseinrichtung zuzuführen. Außerdem ist es so möglich, dass einzelne Stationen mit ihren Funkeinrichtungen die Signale des weiteren Sensors an andere Stationen und deren Zustandsüberwachungseinrichtungen weiterleiten.

In einer besonders vorteilhaften Variante sind an der Zustandsüberwachungseinrichtung mehrere Funkstationen in Form eines Funknetzwerkes angekoppelt, die mehrere Bereiche der industriellen Produktion abdecken und wobei jede der Funkstationen in der Lage ist, ein ad-hoc-Netzwerk mit dem weiteren Sensor zu bilden.

Vorteilhaft weist der weitere Sensor einen Datenspeicher auf, wobei eine Aufzeichnung und spätere Wiedergabe einer Anzahl Werte für das jeweilige Signal erfolgt. Insbesondere ist der Datenspeicher vorteilhaft so bemessen, dass die weiteren Signale eines kompletten Durchlaufs des Sensors durch die Produktionseinrichtung möglich ist. Insbesondere für diesen Anwendungsfall ist es von Vorteil, wenn durch den weiteren Sensor eine Zeitinformation bei der Erfassung eines Wertes für das weitere Signal erfasst, gespeichert und bei der Übertragung des weiteren Signals bzw. des Wertes übermittelt wird. Dabei können durch den weiteren Sensor auch eine Vorverarbeitung der Werte und Signale, insbesondere eine Filterung oder eine Datenkompression, vorgesehen sein.

In einer vorteilhaften Variante wird die gewonnene Zustandsinformation zum Anstoß oder zur Planung einer Wartung der Produktionseinrichtung verwendet. Weitere Einsatzgebiete können eine Qualitätssicherung, eine Erfassung einer Produktivität oder Auslastung oder andere betriebswirtschaftliche Zwecke sein.

In einer vorteilhaften Variante sind auf dem weiteren Sensor Informationen über die Interpretation oder Auswertung zumindest eines Teils der weiteren Daten gespeichert, wobei diese Informationen an die Zustandsüberwachungseinrichtung übertragen und von dieser Zustandsüberwachungseinrichtung zur Bewertung der weiteren Signale bzw. der daraus resultierenden Daten verwendet werden. Damit ist es beispielsweise möglich, durch das Vorhalten einer Anzahl verschieden vorkonfigurierter weiterer Sensoren situationsbedingt die Zustandsüberwachung zu beeinflussen oder zu programmieren, beispielsweise durch die Vorgabe unterschiedlicher Grenzwerte für Temperatur, Vibration und andere Messgrößen in Abhängigkeit betrieblicher Erfordernisse, Witterung oder anderer Einflussfaktoren.

Vorteilhaft sind die weiteren Sensoren zu einem autarken Betrieb ausgerüstet, insbesondere durch einen Energiespeicher oder durch die Möglichkeit, Energie berührungslos aufzunehmen ("energy harwesting"), wobei beispielsweise Solarzellen, drahtlose Ladetechniken (z.B. gemäß dem PUI-Standard) und andere Verfahren zum Einsatz kommen können. In einer Variante können sich die Sensoren bei Nichtbenutzung selbsttätig deaktivieren und durch ein externes Ereignis, beispielsweise durch ein Bewegen (Bewegungssensor, Schüttelsensor), durch ein Funksignal, durch einen Lichtimpuls oder dergleichen "aufgeweckt" werden. In einer weiteren Variante ist es möglich, die weiteren Sensoren zur Kommunikation mit einem RFID-Funkmodul auszurüsten. Dabei kann die Sensorik entweder durch einen eigenen Energiespeicher mit Energie versorgt werden, oder aber durch ein elektromagnetisches Wechselfeld der Funkübertragung.

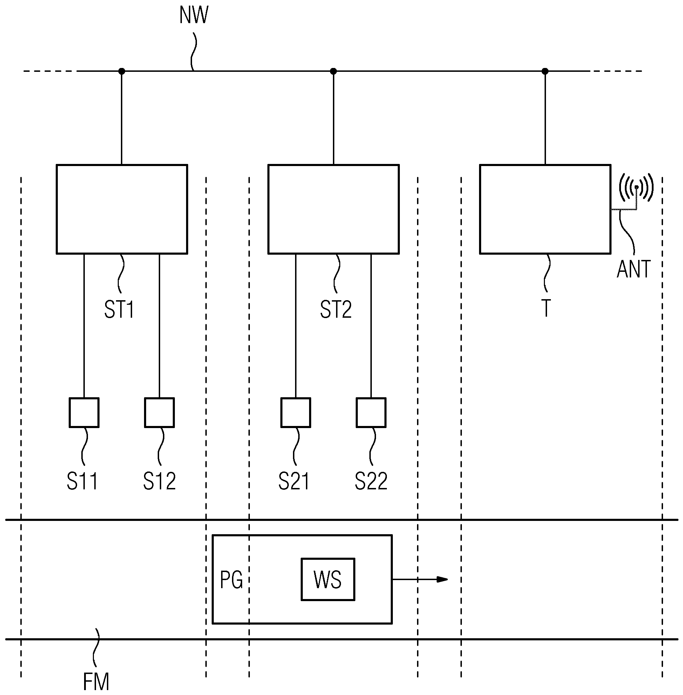

Ein Ausführungsbeispiel des erfindungsgemäßen Verfahrens wird nachfolgend anhand der Zeichnung erläutert. Dies dient gleichzeitig der Erläuterung einer erfindungsgemäßen Anordnung. Dabei zeigt die einzige Figur in einer schematischen Darstellung eine Produktionseinrichtung, die von einem Produktionsgut mit einem weiteren Sensor durchlaufen wird.

In der Figur ist eine Produktionseinrichtung (Produktionsstraße) einer industriellen Automatisierungsanordnung gezeigt, wobei die Produktionseinrichtung Steuerungseinrichtungen ST1 und ST2 (speicherprogrammierbare Steuerungen) mit daran angeschlossenen Sensoren S11, ..., S22 und Aktoren (nicht dargestellt) aufweist. Üblicherweise sind die Sensoren an Produktionsmitteln wie Motoren, Maschinen, Getriebe, Pumpen, Kessel, Förderer, Reaktoren etc. angebracht, die aus Gründen der Übersichtlichkeit in der Figur nicht dargestellt sind. Die Steuerungen ST1 und ST2 gehören dabei in diesem Ausführungsbeispiel zu unterschiedlichen Produktionsstationen, wobei die Produktionsstationen von einem Fördermittel FM (Förderstraße, Fließband etc.) durchlaufen werden, und wobei durch das Fördermittel FM ein Produktionsgut PG mit einem mobilen weiteren Sensor WS hindurchgeführt wird. Über ein Netzwerk (Datennetzwerk, Automatisierungsnetzwerk o.ä.) sind die Steuerungen ST1, ST2 mit einer Zustandsüberwachungseinrichtung Z verbunden. Die Zustandsüberwachungseinrichtung Z umfasst zumindest ein Funkmodul (nicht dargestellt) mit zumindest einer Antenne ANT. Solche mobilen Sensoren werden manchmal auch als "Schüttgutsensorik" bezeichnet, weil sie zusammen mit Produktionsgut PG durch die Anlagen geschleust werden können.

Zur Vereinfachung wird in diesem Ausführungsbeispiel davon ausgegangen, dass der weitere Sensor WS beim Durchlauf der Produktionseinrichtung fortlaufend Daten sammelt und zusammen mit jeweils einem Zeitstempel und vorteilhaft, falls verfügbar (z.B. mittels GPS-Modul), auch einer Ortsinformation speichert und erst beim Verlassen der Produktionseinrichtung in einen Funkbereich der Antenne ANT gelangt und dabei mit der Zustandsüberwachungseinrichtung Z bzw. einem mit dieser verknüpften Funkmodul ein ad-hoc-Netzwerk bildet und dabei die gesammelten Daten, die im Folgenden auch als weitere Signale bezeichnet werden sollen, zusammen mit den Zeitinformationen (Zeitstempel) an die Zustandsüberwachungseinrichtung Z überträgt. In anderen Varianten können über die Produktionseinrichtung verteilt mehrere Funkmodule mit Antennen ANT verteilt sein, um den weiteren Sensor WS stets zeitnah auszulesen, wodurch bei dieser Variante auch auf einen größeren Speicher und ggf. auch auf das Zeitstempeln der weiteren Signale (Messdaten) des weiteren Sensors WS verzichtet werden kann.

Durch die Zustandsüberwachungseinrichtung Z werden die weiteren Signale, also die Messwerte des weiteren Sensors WS mit jeweils Zustandsinformationen, Sensordaten etc. der Steuerungen ST1, ST2 in Bezug gesetzt. Dies bedeutet, dass die in den Steuerungen ST1, ST2 ohnehin vorliegenden Daten, die bereits eine begrenzte Aussage über den Zustand von einzelnen Produktionsmittels, Maschinen ermöglichen, mit den weiteren, zusätzlichen Informationen, die der weitere Sensor WS liefert, kombiniert werden, so dass eine bessere, präzisere Aussage über den Zustand der jeweiligen Produktionsmittel getroffen werden kann. So kann beispielsweise der weitere Sensor WS Beschleunigungsdaten über die Dynamik des Fördermittels FM aufnehmen. Diese Daten werden beispielsweise in Bezug gesetzt mit einer Information über die Masse (Gewicht) des Produktionsgutes PG, welches mit dem Fördermittel FM transportiert wird. Erst durch Kenntnis der Dynamik (Beschleunigung) und der Masse des bewegten Produktionsgutes PG kann eine realistische Aussage über den Zustand der Antriebstechnik des Fördermittels FM, also beispielsweise Drehmoment oder Leistung, gemacht werden.

Im folgenden Abschnitt soll angenommen werden, dass es sich bei der dargestellten Produktionseinrichtung um eine Verpackungsanlage handelt, bei der eine Flüssigkeit (Getränk, Medizin, ...) abgefüllt wird. Das Produktionsgut PG durchläuft dabei verschiedene Maschinenmodule und damit auch Produktionsstationen, beispielsweise zum Reinigen einer Flasche, zum Befüllen, zum Versiegeln, zum Beschriften und schließlich zum Verpacken in Folie oder in einem Karton. Zwischen den einzelnen Produktionsstationen und Maschinenmodulen befinden sich die Fördermittel FM, also Maschinen zum Materialtransport (Förderbänder, Förderschnecken, Handhabungssysteme etc.), Lagersysteme, Puffer etc. Anstelle wie traditionell im Maschinenbau üblich primär oder ausschließlich die Maschine mit Sensorik (Sensoren S11, ..., S22) als Teil der Automatisierungstechnik zu versehen, wird jetzt eine zusätzliche Sensorik (weiterer Sensor WS) an bzw. ggf. sogar in einer Flasche (d.h. dem Produkt) in den Produktionsprozess eingespeist. Dabei können entweder herkömmliche Flaschen mit einer zusätzlichen Sensorik versehen werden oder es können auch sogenannte "Dummy-Flaschen" eingesetzt werden, die in Form und Größe einer herkömmlichen Flasche entsprechen, jedoch keinen Nutzinhalt aufnehmen können und stattdessen eine Elektronik mit Sensorik, Funkmodulen, Speichermitteln etc. umfassen.

Mit einem Durchlauf dieser mit Sensorik ausgerüsteter Flasche werden mithin Zustandsinformationen aller beteiligten Maschinenelemente erfasst und auch der Einfluss der entsprechenden Zustände auf das Produkt (Qualität, Fertigungszeiten etc.) erfasst. Dabei können beispielsweise als Zustandsinformation Temperatur, Erschütterung, Beleuchtungssituation etc. erfasst werden. Die Zuordnung zu einzelnen Maschinen, Maschinenelementen, Produktionsstationen etc. kann durch die Auflösung des Ortes erfolgen, die wiederum entweder direkt als Ortsinformation (beispielsweise durch ein GPS-Sensor) ermittelt wird, oder aber durch eine Korrelation des Zeitstempels eines Messwertes mit dem Zeitstempel einer Tracking-Information, die seitens der Produktionseinrichtung bzw. der Steuerungen ST1, ST2 beim Verarbeiten des Produktionsgutes PG mit dem weiteren Sensor WS erfasst wird. Im letzteren Fall ist es beispielsweise möglich, ein jeweiliges Produktionsgut PG mit einer Identifizierungsinformation zu versehen, beispielsweise einer RFID-Etikette, einem Barcode oder dergleichen, wobei an jeder Verarbeitungsstation, an jeder Maschine oder jeder Produktionsstation das Produktionsgut PG automatisch identifiziert wird, so dass über diesen Weg eine Korrelation der weiteren Signale (Messwerte) des weiteren Sensors WS mit den Statusinformationen (interne Statusinformationen, Messwerte der Sensoren S11, ..., S22 etc.) durch die Zustandsüberwachungseinrichtung Z erfolgen kann.

Ein weiteres Beispiel für einen weiteren Sensor kann im Bereich der Drucktechnik angesiedelt sein, wobei ein Sensor auf der Druckbahn eines Papiers der Erfassung von Dehnung, Spannung, Druck der Druckwalze, Temperatur, Schwingungen etc. dienen kann. Insbesondere im Zusammenhang mit den Zeitstempeln der weiteren Signale (Sensorwerte) und die damit mögliche Lokalisierung bzw. Zuordnung der Messwerte zu einzelnen Maschinen und damit Produktionsmitteln können kritische Stellen im Produktionsdurchlauf beim Bedrucken einer Papierbahn oder dergleichen lokalisiert werden.

Durch die Korrelation der Messwerte des weiteren Sensors WS mit den in den Produktionsmitteln ohnehin vorliegenden Daten und Zustandsinformationen ist es möglich, Wartungsinformationen zu erzeugen. Zum einen können Grenzwertüberschreitungen oder andere Auffälligkeiten bereits defekte Maschinenteile oder Produktionsmittel identifizieren und somit einen Fehler anzeigen bzw. eine sofortige Wartung auslösen. Zum anderen ist es möglich, mittels der Kombination der verschiedenen Daten und Informationen eine vorausschauende Wartung durchzuführen, um beispielswiese schleichende Veränderungen an Produktionsmittel zu erkennen und somit vorbeugend eine Wartung eine Wartung einzuplanen und durchzuführen.

Es ist weiterhin möglich, mit dem weiteren Sensor bzw. in einem auslesbaren elektronischen Speicher der weiteren Sensoren WS Grenzwerte oder Auswertealgorithmen oder Anweisungen zur Bewertung der Messergebnisse zu hinterlegen. Diese weiteren Informationen umfassen insbesondere Algorithmen oder Methoden der KI (neuronale Netzwerke oder regelbasierte Wissensrepräsentation), die somit vom weiteren Sensor WS mitgeliefert oder zumindest parametriert werden. In einer weiteren Ausführungsform können die von dem Sensor bereitgestellten Informationen auch zur Parametrierung der jeweiligen lokalen Steuerungseinrichtung verwendet werden, beispielsweise zur Anpassung von Reglern.

Es ist beispielsweise im Automobilbau möglich, einen weiteren Sensor mit einer Rohkarosse zu verbinden, wobei die Rohkarosse beispielsweise eine Lackierstation durchfährt. Mittels der Aufzeichnungen des weiteren Sensors WS kann später verifiziert werden, wie lange und mit welcher Temperatur die Rohkarosse vor dem Lackiervorgang vorgewärmt wurde, wie lange der Lackiervorgang gedauert hat und wie lange und bei welchem Temperaturverlauf der Lack getrocknet wurde. Eine Verknüpfung mit internen Daten der Produktionseinrichtung ermöglicht es dabei der Zustandsüberwachungseinrichtung Z, die Sollwerte bei den Trocknungstemperaturen und Vorwärmtemperaturen etc. mit den erreichten Istwerten zu vergleichen. Weiterhin ist es aber auch möglich, verschieden vorprogrammierte weitere Sensoren mit unterschiedlich eingestellten Grenzwerten vorzuhalten, wobei dann durch Auswahl eines entsprechend vorprogrammierten weiteren Sensors die Messergebnisse unterschiedlich interpretiert werden. So kann im Beispiel der Lackierstraße im Automobilbau dem Umstand Rechnung getragen werden, dass größere oder komplexere Karosserien sich nur langsamer erwärmen oder wieder abkühlen, als kleinere Einheiten, so dass die erreichten Aufheiz- und Abkühlzeiten anders bewertet werden müssen. Durch Auswahl eines weiteren, mobilen Sensors WS mit jeweils angepasstem Grenzwert für die Toleranz oder die erlaubten oder geforderten Zeiten für das Aufwärmen oder Abkühlen der Karosserien kann diesem Umstand Rechnung getragen werden, so dass nicht fälschlich von einer Fehlfunktion ausgegangen werden kann.

Grundsätzlich werden bekannte Verfahren zur Zustandsüberwachung ergänzt durch Verfahren zur Zustandsanalyse von Maschinen und Produkten auf der Basis verteilter, mobiler sowie ad-hoc vernetzter Low-Cost Sensorik ("Schüttgutsensorik"). Verteilte, mobile sowie ad-hoc vernetzte Low-Cost Sensorik ist charakterisiert durch Sensoren, die vorzugsweise am Werkstück oder im Prozess mitgeführt werden und nicht an der Produktionsmaschine stationär im Einsatz sind. Typisch ist der Einsatz sehr vieler Sensoren und Messpunkte, daher können AI-Methoden (z.B. Mustererkennung/Deep Learning/Neuronale Netzwerke) zur Verarbeitung eingesetzt werden. Vorteilhaft handelt es sich um robuste Sensorik (auch gekapselt in IPxx) und multifunktionale Sensorik (d.h. für Temperatur, Ort, Licht, Schwingung, Beschleunigung ...). Die Multifunktionalität ermöglicht eine universelle Verwendung, daher sind sehr hohe Stückzahlen und somit geringe Stückkosten möglich. Zur Kommunikation eignet sich drahtlose ad-hoc-Kommunikation (z.B. Bluetooth, RFID-Technik, ZigBee), besonders in Verbindung mit einer autarken Energieversorgung. Vorteilhaft wird ein Zeit/Ortstempel mit den Signalen verknüpft. Wesentlich ist eine Korrelation der Signale mit den Größen und Signalen der Automatisierungstechnik.

## Patentansprüche

1. Verfahren zur Überwachung des Zustands einer Produktionseinrichtung einer industriellen Automatisierungsanordnung, wobei die Produktionseinrichtung zur Durchführung eines industriellen Prozesses oder einer industriellen Produktion mit einer Steuerungseinrichtung (ST1, ST2) mit daran angekoppelten Sensoren (S11, ..., S22) und Aktoren ausgerüstet ist, und wobei Signale dieser Sensoren (S11, ..., S22) durch die Steuerungseinrichtung (ST1, ST2) zur Erzeugung von Statusinformationen über den industriellen Prozess oder die industrielle Produktion verwendet werden,
**dadurch gekennzeichnet,**
**dass** mit einem durch die Produktionseinrichtung verarbeiteten Produkt (PG) zumindest ein weiterer Sensor durch die Produktionseinrichtung hindurchgeführt wird,
**dass** durch den weiteren Sensor (WS) weitere Signale drahtlos zu der Zustandsüberwachungseinrichtung (Z) übertragen werden, und
**dass** die Signale und/oder die Statusinformationen und die weiteren Signale zur Generierung einer Zustandsinformation über die Produktionseinrichtung zumindest teilweise miteinander in Bezug gesetzt verwendet werden.

2. Verfahren nach Patentanspruch 1,
**dadurch gekennzeichnet,**
**dass** die Zustandsüberwachungseinrichtung (Z) auf interne Daten der Steuerungseinrichtung (ST1, ST2) der Produktionseinrichtung, insbesondere auf die Signale der Sensoren (S11, ..., S22) und/oder die Statusinformationen über den industriellen Prozess oder die industrielle Produktion, über ein Netzwerk oder eine Datenschnittstelle zugreift.

3. Verfahren nach einem der vorherigen Patentansprüche,
**dadurch gekennzeichnet,**
**dass** der weitere Sensor (WS) mit der Zustandsüberwachungseinrichtung (Z) ein ad-hoc-Netzwerk bildet, sobald der weitere Sensor (WS) in die Funkreichweite eines Funkmoduls der Zustandsüberwachungseinrichtung (Z) gelangt.

4. Verfahren nach einem der vorherigen Patentansprüche,
**dadurch gekennzeichnet,**
**dass** die Produktionseinrichtung aus einer Mehrzahl Produktionsstationen gebildet wird, wobei der weitere Sensor (WS) während eines Durchlaufs durch die Produktionseinrichtung zur Zustandserfassung mehrerer Produktionsstationen verwendet wird.

5. Verfahren nach Patentanspruch 4,
**dadurch gekennzeichnet,**
**dass** der weitere Sensor (WS) im Durchlauf der Produktionseinrichtung mit einer Mehrzahl von Funkeinrichtungen einer einzigen Zustandsüberwachungseinrichtung (Z) oder mit einer Mehrzahl von Zustandsüberwachungseinrichtungen der industriellen Produktionseinrichtung die weiteren Signale austauscht.

6. Verfahren nach einem der vorherigen Patentansprüche,
**dadurch gekennzeichnet,**
**dass** der weitere Sensor (WS) einen Datenspeicher aufweist, wobei eine Aufzeichnung und spätere Wiedergabe einer Anzahl Werte für das jeweilige Signal erfolgt.

7. Verfahren nach einem der vorherigen Patentansprüche,
**dadurch gekennzeichnet,**
**dass** durch den weiteren Sensor (WS) eine Zeitinformation und/oder Ortsinformation bei der Erfassung eines Wertes für das weitere Signal erfasst, gespeichert und bei der Übertragung des weiteren Signals übermittelt wird.

8. Verfahren nach einem der vorherigen Patentansprüche,
**dadurch gekennzeichnet,**
**dass** die Zustandsinformation zum Anstoß oder zur Planung einer Wartung der Produktionseinrichtung verwendet wird.

9. Verfahren nach einem der vorherigen Patentansprüche,
**dadurch gekennzeichnet,**
**dass** auf dem weiteren Sensor (WS) Informationen, insbesondere Algorithmen und/oder Parameter, für die Interpretation oder Auswertung zumindest eines Teils der weiteren Daten gespeichert sind, wobei diese Informationen an die Zustandsüberwachungseinrichtung (Z) übertragen und von dieser Zustandsüberwachungseinrichtung (Z) zur Bewertung der weiteren Signale verwendet werden.

10. Anordnung nur Überwachung des Zustands einer Produktionseinrichtung einer industriellen Automatisierungsanordnung, wobei die Produktionseinrichtung zur Durchführung eines industriellen Prozesses oder einer industriellen Produktion mit Sensoren (S11, ..., S22) und Aktoren ausgerüstet ist, und wobei Signale dieser Sensoren (S11, ..., S22) zur Erzeugung von Statusinformationen über den industriellen Prozess oder die industrielle Produktion durch die Steuerungseinrichtung (ST1, ST2) vorgesehen sind,
**dadurch gekennzeichnet,**
**dass** vorgesehen ist, dass mit einem durch die Produktionseinrichtung verarbeiteten Produkt (PG) zumindest ein weiterer Sensor (WS) durch die Produktionseinrichtung hindurchgeführt oder in die Nähe der Produktionseinrichtung verbracht wird, dass durch den weiteren Sensor (WS) weitere Signale drahtlos zu der Zustandsüberwachungseinrichtung (Z) übertragbar sind, und
**dass** vorgesehen ist, dass die Signale der Sensoren (S11, ..., S22) und/oder die Statusinformationen mit den weiteren Signalen des weiteren Sensors (WS) zumindest teilweise miteinander in Bezug gesetzt und zur Generierung einer Zustandsinformation über die Produktionseinrichtung verwendet werden.

11. Anordnung nach Patentanspruch 10,
**dadurch gekennzeichnet,**
**dass** die Zustandsüberwachungseinrichtung (Z) als ein separates Funktionsmodul in einer Steuerungseinrichtung (ST1, ST2) der Produktionseinrichtung integriert ist.

12. Anordnung nach Patentanspruch 10 oder 11,
**dadurch gekennzeichnet,**
**dass** die weiteren Sensoren (WS) zu einem autarken Betrieb ausgerüstet sind, insbesondere durch einen Energiespeicher.

13. Anordnung nach einem der Patentansprüche 10 bis 12,
**dadurch gekennzeichnet,**
**dass** der weitere Sensor (WS) zur Bildung eines ad-hoc-Netzwerkes mit einer Funkeinrichtung der Zustandsüberwachungseinrichtung (Z) ausgebildet ist.
